# EUROPÄISCHE PATENTSCHRIFT

(11) **EP 0 408 947 B1**
(45) Veröffentlichungstag und Bekanntmachung des Hinweises auf die Patenterteilung: **09.03.1994**
(21) Anmeldenummer: 90112405.7
(22) Anmeldetag: 29.06.1990
(51) Int. Cl.: C08G 12/32, C08G 12/42, C08J 9/00, D01F 6/74

(54) **Formkörper aus Melaminharzen mit erhöhter Elastizität**
Melamine resin article with higher elasticity
Article en résine de mélamine à élasticité accrue

(30) Priorität: 11.07.1989 DE 3922733
(43) Veröffentlichungstag der Anmeldung: 23.01.1991
(73) Patentinhaber: BASF Aktiengesellschaft, 67063 Ludwigshafen (DE)
(72) Erfinder: Weiser, Jürgen, Dr., D-6905 Schriesheim (DE); Reuther, Wolfgang, Dr., D-6900 Heidelberg (DE); Turznik, Gerhard, Dr., D-6700 Ludwigshafen (DE); Fath, Wolfgang, Dr., D-6945 Hirschberg (DE); Berbner, Heinz, D-6942 Moerlenbach (DE); Graalmann, Onno, Dr., D-6915 Dossenheim (DE)

(56) Entgegenhaltungen:
- DE-A- 3 531 912

## Beschreibung

Die Erfindung betrifft Formkörper, insbesondere Schaumstoffe und Fasern aus Melamin/Formaldehyd-Kondensationsharzen mit erhöhter Elastizität, bei denen ein Teil des Melamins durch substituiertes Melamin ersetzt ist.

Schaumstoffe und Fasern aus Melaminharzen sind bekannt, z. B. aus DE-A-29 15 457 und DE-A-23 64 091. Der vorliegenden Erfindung lag die Aufgabe zugrunde, die Elastizität derartiger Formkörper zu verbessern.

In der DE-A-29 15 457 sind Schaumstoffe aus Melamin/Formaldehyd-Kondensationsharzen beschrieben, bei denen Melamin ganz oder teilweise durch alkylsubstituiertes Melamin ersetzt sein kann. Ein Ersatz durch Hydroxy-oxaalkyl-melamine ist nicht offenbart.

In der EP-A-221 330 sind Formkörper, vorzugsweise Schaumstoffe und Fasern aus Melamin-Fornaldehyd-Kondensationsharzen beschrieben, bei denen 1 bis 80 Gew.% des Melamins durch Hydroxyalkylamin-melamin ersetzt ist. Durch den Zusatz wird die Festigkeit erhöht, die Elastizität jedoch herabgesetzt.

Es wurde gefunden, daß die Elastizität der Formkörper erhöht wird, wenn in den Melamin/Formaldehyd-Kondensationsharzen 0,1 bis 70 Mol% des Melamins durch ein mit 1 bis 3 Hydroxy-oxaalkyl-Gruppen substituiertes Melamin ersetzt ist.

### Gegenstand der Erfindung sind somit

Formkörper, vorzugsweise Schaumstoffe und Fasern auf Basis von Melamin-Formaldehyd-Kondensationsprodukten, bei denen 0,1 bis 70 Mol% des Melamins ersetzt ist durch mit 1 bis 3 Hydroxy-oxaalkyl-Gruppen der Formel

-(CH₂-CH₂-O)ₙ-CH₂-CH₂-OH (n = 1 - 5)

substituiertes Melamin.

Die für die Herstellung der Formkörper geeigneten Melamin-Formaldehyd-Kondensationsproduktes sind bekannt und beispielsweise in der DE-A-29 15 457 beschrieben. Das Molverhältnis Melamin zu Formaldehyd kann in weiten Grenzen zwischen 1 : 1,5 bis 1 : 4,5 schwanken, vorzugsweise liegt es zwischen 1 : 2,5 und 1 : 3,5.

Wesentliches Merkmal der vorliegenden Erfindung ist der Einsatz von Hydroxy-oxaalkyl-melaminen. Diese Stoffe und ihre Herstellung sind bekannt aus der EP-A-225 433. Es handelt sich dabei um Melamine, die 1 bis 3 Gruppen der Formel

-(CH₂-CH₂-O)ₙ-CH₂-CH₂-OH (n = 1 - 5)

tragen, insbesondere die 5-Hydroxy-3-oxapentyl-Gruppe. Besonders geeignet sind N-Mono-, N,N'-Bis- und N,N'N''-Tris-(5-hydroxy-3-oxa-pentyl)melamin. Bevorzugt wird ein Gemisch dieser drei Verbindungen eingesetzt, beispielsweise im Molverhältnis 1 : 0,5 bis 10 : 0,5 bis 10. Hydroxy-oxaalkylmelamine sind - im Gegensatz zu Hydroxyethylmelaminen in wäßriger Lösung unbegrenzt lagerfähig. Erfindungsgemäß werden in den bekannten Melamin-Formaldehyd-Kondensationsprodukten 0,1 bis 70 Mol% des Melamins durch Hydroxy-oxaalkyl-melamine ersetzt.

Für die Herstellung von Fasern verwendet man zweckmäßig 1 bis 70, vorzugsweise 2 bis 50 und insbesondere 5 bis 25 Mol% des substituierten Melamins.

Für die Herstellung von Schaumstoffen verwendet man zweckmäßig 0,1 bis 50, vorzugsweise 0,5 bis 30 und insbesondere 1 - 15 Mol% des substituierten Melamins.

Zur Herstellung der Harze werden Melamin und substituiertes Melamin zusammen mit Formaldehyd polykondensiert. Man kann aber auch von Gemischen der einzelnen Kondensationsprodukte mit Formaldehyd ausgehen oder dem einen Kondensationsprodukt noch nachträglich weiteres (substituiertes) Melamin zufügen. Die Harze haben im allgemeinen ein Molverhältnis der Melamin-Komponenten zu Formaldehyd von 1 : 1,5 bis 1 : 4,5, vorzugsweise 1 : 2,5 bis 1 : 3,5. Sie können geringe Mengen üblicher Zusätze enthalten, wie Disulfit, Formid, Citrat, Phosphat, Polyphosphat, Harnstoff, Dicyandiamid oder Cyanamid. Die Herstellung der Formkörper durch Härtung der Harze erfolgt in üblicher Weise durch Zusatz von geringen Mengen an Säuren, vorzugsweise Ameisensäure.

Schaumstoffe können hergestellt werden durch Verschäumen einer wäßrigen Lösung oder Dispersion, welche das erfindungsgemäß modifizierte Melamin/Formaldehyd-Vorkondensat, einen Emulgator, ein Treibmittel und einen Härter, sowie gegebenenfalls übliche Zusatzstoffe enthält, und anschließendes Aushärten des Schaumes. Es hat sich gezeigt, daß besonders elastische Schaumstoffe dann erhalten werden, wenn man verhältnismäßig hochkonzentrierte, vorzugsweise über 68 gewichtsprozentige und insbesondere über 72 gewichtsprozentige Lösungen oder Dispersionen einsetzt (wobei sich die Konzentrationen auf die Mischung Harz und Wasser ohne Zusatzstofe beziehen) und wenn man unter solchen Bedingungen verschäumt, daß zunächst nur ein geringer Viskositätsanstieg erfolgt und der Härtungsvorgang unter starker Viskositätserhöhung erst dann einsetzt, wenn der Schäumvorgang weitgehend beendet ist. Ein solches Verfahren ist in der DE-A-29 15 457 eingehend beschrieben. Die erhaltenen Schaumstoffe zeichnen sich durch erhöhte Elastizität, Reißdehnung und Zugfestigkeit aus.

Zur Herstellung von Fasern wird das erfindungsgemäß modifizierte Melamin-Formaldehyd-Harz in an sich bekannter Weise nach Zusatz eines Härters in einer erhitzten Atmosphäre versponnen und gleichzeitig das Lösungsmittel (H₂O) verdampft und das Kondensat ausgehärtet. Ein solches Verfahren ist in der DE-A-23 64 091 eingehend beschrieben. Die erhaltenen Fasern zeichnen sich durch erhöhte Dehnung und geringer Gleitreibung aus.

### Beispiel 1

### Melaminharz mit 10 Mol% substituiertem Melamin

114 g Formaldehyd (40 %), 160 g Melamin, 70 g Paraformaldehyd, 58 g 80 %iges Hydroxyoxa-pentylmelamin (Mono-, Bis- und Tris-1 : 5 : 4), 9 g Natriumdisulfit und 11 g Dicyandiamid werden auf 95°C erhitzt. Sobald eine klare Lösung vorliegt wird der pH auf 8 gestellt. Das Gemisch wird so lange bei 95°C gehalten bis eine Viskosität von 350 Pas erreicht ist. Nach zügigem Abkühlen wird ein Harz mit einer Endviskosität von 380 Pas erhalten.

### Faserherstellung und physikalische Daten

Dem oben beschriebenen Harz werden 2 % Ameisensäure (35 %) zugesetzt, homogen vermischt und einer Zentrifugal-Spinnapparatur zugeführt. Man erhält Fasern mit einem Durchmesser von 5 bis 15 µm. Die endgültige Festigkeit wird durch einen Temperprozeß (200°C , 10 min) erreicht.

Die Reißdehnung der HOM (Hydroxaalkylmelamin) -Fasern beträgt 30 % (vgl. HEM (Hydroxyethylmelamin) 15 %). Beim Gleitreibungsversuch wurde bei einer Geschwindigkeit von 2 mm/s ein Koeffizient von 0,65 ermittelt (HEM 0,9).

### Beispiel 2

### Melaminharz mit 3 Mol% substituiertem Melamin

20 g eines Gemisches von N-Mono-, N,N'-Bis- und N,N',N''-Tris-hydroxy-oxapentyl-melamin im Molverhältnis 1 : 5 : 4 wird in 80 g Wasser aufgelöst. Diese Lösung ist deutlich länger als 6 Monate lagerstabil.

50 g dieser Lösung werden mit 200 g eines sprühgetrockneten, Sulfitgruppen enthaltenden Melamin/Formaldehydharzes (Molverhältnis 1 : 3) und 51 g Wasser, in dem 2 g Natriumformiat und 4 g Natriumcitrat gelöst sind, unter Rühren bei Raumtemperatur homogen vermischt.

### Schaumherstellung und physikalische Daten

In die oben beschriebene Harzlösung wird ein Gemisch von 5 g Wasser, 4,5 g des Natriumsalzes der C-15 Paraffinsulfonsäure (als 40 %ige Lösung) und 2,7 g des Natriumsalzes eines sulfatierten mit 80 Mol Ethylenoxid umgesetzten C-16/C-18-Alfols (als 50 %ige Lösung), 7,0 g Ameisensäure (75 %ig) und 50 g Pentan homogen eingearbeitet.

Der so erhaltene schäumbare Gemisch wird bei 120 Grad in einem Mikrowellenofen unter Einstrahlung von Mikrowellenenergie geschäumt und gehärtet. Der Rohschaum wird anschließend 30 Minuten lang mit 250 Grad heißer Luft durchströmt. Der fertige Schaumstoff weist eine Dichte von 12 kg/m³ auf. 17 % des Melamins sind durch Hydroxy-oxa-pentylmelamin ersetzt.

Gegenüber einem Schaumstoff, der ohne den erfindungsgemäßen Zusatz hergestellt wurde, ist die Reißdehnung (DIN 53 455) um 25 % erhöht.

## Patentansprüche

1. Formkörper auf Basis von Melamin-Formaldehyd-Kondensationsprodukten, bei denen 0,1 bis 70 Mol% des Melamins ersetzt ist durch mit 1 bis 3 Hydroxy-oxaalkyl-Gruppen der Formel
-(CH₂-CH₂-O)ₙ-CH₂-CH₂-OH (n = 1 - 5)
substituiertes Melamin.

2. Formkörper nach Anspruch 1, dadurch gekennzeichnet, daß die Hydroxy-oxaalkylgruppe die 5-Hydroxy-3-oxapentyl-Gruppe ist.

3. Formkörper nach Anspruch 1, dadurch gekennzeichnet, daß das substituierte Melamin ein Gemisch aus N-Mono-, N,N'-Bis- und N,N',N''-Tris-(5-hydroxy-3-oxapentyl)-melamin ist.

4. Formkörper nach einem der Ansprüche 1 bis 3, dadurch gekennzeichnet, daß sie Schaumstoffe sind.

5. Formkörper nach einem der Ansprüche 1 bis 3, dadurch gekennzeichnet, daß sie Fasern sind.

## Claims

1. A molding based on a melamine/formaldehyde condensation product, in which from 0.1 to 70 mol% of the melamine has been replaced by melamine substituted by from 1 to 3 hydroxyoxaalkyl groups of the formula
-(CH₂-CH₂-O)ₙ-CH₂-CH₂-OH (n = 1 - 5).

2. A molding as claimed in claim 1, wherein the hydroxyoxaalkyl group is the 5-hydroxy-3-oxapentyl group.

3. A molding as claimed in claim 1, wherein the substituted melamine is a mixture of N-mono-, N,N'-bis and N,N',N''-tris(5-hydroxy-3-oxapentyl)melamine.

4. A molding as claimed in any of claims 1 to 3, which is a foam.

5. A molding as claimed in any of claims 1 to 3, which is a fiber.

## Revendications

1. Corps moulés à base de produits de condensation mélamine-formaldéhyde dans lesquels 0,1 à 70 moles % de la mélamine est remplacé par de la mélamine substituée avec 1 à 3 groupes hydroxy-oxaalkyle de la formule
-(CH₂-CH₂-O)ₙ-CH₂-CH₂-OH (n = 1 - 5)

2. Corps moulés selon la revendication 1, caractérisés par le fait que le groupe hydroxy-oxaalkyle est le groupe 5-hydroxy-3-oxapentyle.

3. Corps moulés selon la revendication 1, caractérisés par le fait que la mélamine substituée est un mélange de N-mono-, N,N'-bis- et N,N',N''-tris-(5-hydroxy-3-oxapentyl)-mélamine.

4. Corps moulés selon l'une des revendications 1 à 3, caractérisés par le fait que ce sont des matériaux alvéolaires.

5. Corps moulés selon l'une des revendications 1 à 3, caractérisés par le fait que ce sont des matériaux fibreux.
